# EUROPÄISCHE PATENTSCHRIFT

(11) **EP 1 189 825 B1**
(45) Veröffentlichungstag und Bekanntmachung des Hinweises auf die Patenterteilung: **18.02.2004**
(21) Anmeldenummer: 00971426.2
(22) Anmeldetag: 06.11.2000
(51) Int. Cl.: B65G 1/06, B65G 13/07, B65G 47/54

(54) **TRANSPORT- UND/ODER LAGERVORRICHTUNG FÜR STÜCKGÜTER**
CONVEYING AND/OR STORAGE DEVICE FOR PACKAGED GOODS
DISPOSITIF DE TRANSPORT ET/OU DE STOCKAGE POUR MARCHANDISES EN COLIS

(30) Priorität: 27.04.2000 DE 10020608
(43) Veröffentlichungstag der Anmeldung: 27.03.2002
(73) Patentinhaber: Dynamic Systems Engineering bv, 7005 BK Doetinchem (NL)
(72) Erfinder: HOLLANDER, Rudolf, NL-7251 KC Vorden (NL)
(74) Vertreter: Christophersen & Partner
(86) Internationale Anmeldenummer: PCT/EP2000/010927
(87) Internationale Veröffentlichungsnummer: WO 2001/083336

(56) Entgegenhaltungen:
- DE-A- 2 742 579
- GB-A- 1 547 671
- US-A- 4 006 815
- US-A- 4 325 474
- US-A- 4 421 224
- US-A- 4 915 566

## Beschreibung

Die Erfindung betrifft eine Transport- und/oder Lagervorrichtung für Stückgüter, mit mindestens einer Rollenbahn für zu transportierende und/oder zu lagernde Waren, wobei die Rollen oder Walzen der Rollenbahn mit auf den Rollen bzw. Walzen drehbar angeordneten Kraftübertragungselementen versehen sind, die über ein gemeinsames Antriebsmittel in Drehung versetzbar sind, und wobei das übertragbare Drehmoment zwischen dem Kraftübertragungselement und der jeweiligen Rolle bzw. Walze geringer ist, als das übertragbare Drehmoment zwischen dem gemeinsamen Antriebsmittel und dem Kraftübertragungselement.

Aus der Lager- und Kommissioniertechnik sind mehrstöckige Regalkonstruktionen mit nebeneinander und übereinander angeordneten Lagergassen für die Stückgüter bekannt. Die Böden der Lagergassen sind zum Transport der Stückgüter mit Rollenbahnen aus drehbaren Rollen versehen und in der Regel leicht zur Entnahmestelle hin geneigt, so daß die an dem einen Ende der Lagergassen, der sogenannten Beschickungs- oder Bestückungsseite, eingelagerten Waren entlang der Rollenbahnen zu dem am anderen Ende der Lagergassen angeordneten Entnahmebereich hin laufen. Die Einlagerung der Stückgüter auf der Beschickungsseite kann von Hand erfolgen, indem die einzelnen Stückgüter von einer Palette entnommen und in die jeweils zugewiesene Lagergasse eingesetzt werden. Auch das Entnehmen bzw. Kommissionieren im Entnahmebereich des Regals erfolgt oftmals von Hand.

Sofern die Rollenbahnen geneigt sind, bereitet es Probleme, diese für alle Arten von Stückgütern gleichermaßen optimal auszulegen. Schwergewichtige Güter werden unter dem Einfluß der Schwerkraft effektiver und mit höherer Geschwindigkeit entlang der Rollenbahnen transportiert als leichtgewichtige Güter. Ist der Neigungswinkel der Rollenbahn zu gering, kann dies dazu führen, daß leichtgewichtige Güter überhaupt nicht mehr transportiert werden. Wird hingegen der Neigungswinkel erhöht, führt dies zwar zu einem besseren Transport der leichtgewichtigen Güter, zugleich wird jedoch die Transportgeschwindigkeit schwerer Güter überproportional erhöht. Diese bewegen sich mit zunehmender Geschwindigkeit entlang der Rollenbahn, bis sie unter erheblicher mechanischer Belastung gegen einen entnahmeseitigen Stopper stoßen. Im, Falle mehrerer hintereinander in der Gasse angeordneter Stückgutgebinde kann ferner ein erheblicher Staudruck entstehen, der ebenfalls einzig auf die Schwerkraftwirkung zurückzuführen ist.

Eine horizontal ausgerichtete Transportvorrichtung mit den eingangs angegebenen Merkmalen ist aus der US 4,006,815 bekannt. Zur Realisierung einer Art Rutschkupplung bei der Übertragung der Antriebskräfte von dem Antriebsriemen auf die Förderwalze der Transportvorrichtung ist jede Walze mit einer zusätzlichen Antriebsrolle versehen, welche mit der Förderwalze nicht fest verbunden ist, sondern lediglich in Reibschluß steht. Hierüber stützt sich die Förderwalze mit ihrem einen Ende auf der Antriebsrolle ab, an der wiederum der Antriebsriemen angreift. Übersteigt, beispielsweise aufgrund eines Rückstaus auf dem Förderer, das für den Weitertransport der Güter erforderliche Drehmoment das über die so geschaffene Rutschkupplung übertragbare Drehmoment, so dreht die Antriebsrolle unter Schlupf frei durch. Da sich die Förderwalze unter anderem auf der Antriebsrolle abstützt, kommt es bei schwereren Gütern zu einer erhöhten Reibung zwischen Förderwalze und Antriebsrolle und auf diese Weise zu einem erhöhten Staudruck z. B. an einer Stoppeinrichtung.

Eine der Transportvorrichtung nach der US 4,006,815 sehr ähnliche Transportvorrichtung ist ferner aus der DE 27 42 579 A1 bekannt.

Der Erfindung liegt daher die **Aufgabe** zugrunde, eine Transport- und/oder Lagervorrichtung für Stückgüter zu schaffen, mit der sich eine gleichmäßige Transportgeschwindigkeit der Stückgüter erzielen läßt, wobei ein zu hoher Staudruck infolge eines Rückstaus der Stückgüter an etwaigen Hindernissen vermieden werden soll.

Zur **Lösung** dieser Aufgabe wird bei einer Transport- und/oder Lagervorrichtung der eingangs genannten Art vorgeschlagen, daß das Kraftübertragungselement eine Buchse ist, die mit ihrer Innenfläche außen auf einem mit der Rolle bzw. Walze festgebundenen Lagerabschnitt der Rolle bzw. Walze drehbar gelagert ist.

Die erfindungsgemäße Vorrichtung zeichnet sich dadurch aus, daß auf die einzelnen Stückgüter, sofern diese sich an einem Hindernis zurückstauen, nur ein geringer Staudruck ausgeübt wird. Auch wird in diesem Fall eine erhöhte Belastung des Antriebs der Rollenbahn vermieden. Weiterhin läßt sich ein besonders sanfter und gleichmäßiger Antrieb der auf der Rollenbahn geförderten Lagergüter erreichen. Selbst in der herkömmlichen Lager- und Transporttechnik besonders kritische Stückgüter wie z. B. gefüllte Getränkekisten aus Kunststoff lassen sich mit Hilfe der erfindungsgemäßen Rollenbahn störungsfrei und mit geringem Verschleiß an den Fördereinrichtungen verarbeiten. Das Kraftübertragungselement ist eine drehbar auf einem Lagerabschnitt der Rolle bzw. Walze gelagerte Buchse. Es wird eine gezielte, wenn auch nur geringe Reibung zwischen der frei drehbaren Buchse und der Rolle bzw. Walze erzielt. Dies führt zu einem sehr "sanften" Antrieb der Walze mit nur geringem Antriebs- bzw. Drehmoment, wohingegen bei Ansteigen diese Antriebsmomentes die Reibflächen zwischen Buchse und Rolle bzw. Walze durchdrehen, so daß kein nennenswertes Drehmoment von der Buchse auf die Walze mehr übertragen wird. Der Reibwert zwischen Rolle bzw. Walze und der Buchse ist geringer, als das übertragbare Drehmoment zwischen dem gemeinsamen Antriebsmittel und der Buchse. Der so erzielte "sanfte" Antrieb der Walzen führt zu einer Verringerung des Förderdrucks der Rollenbahn, so daß vor allem auf die an erster Stelle am entnahmeseitigen Ende der Lagergasse angeordneten Stückgüter nur ein geringer Staudruck ausgeübt wird. Von Vorteil ist ferner, daß auch die Entnahmevorrichtungen wegen des geringeren Staudrucks der Waren mit geringeren Antriebsleistungen betrieben werden können.

Die Rollenbahn kann entweder horizontal verlaufen, wobei der Transport der Stückgüter ausschließlich durch den Antrieb der Rollen bzw. Walzen bewirkt wird, oder die Rollenbahn kann geringfügig geneigt sein. In letzterem Fall werden zwei Transportmechanismen gleichzeitig eingesetzt. Der erste Transportmechanismus ist der Antrieb der Rollen oder Walzen der Rollenbahn über das gemeinsame Antriebsmittel. Der zweite Antriebsmechanismus ist die Wirkung der Schwerkraft infolge der abschüssig geneigten Rollenbahn. Dieser doppelte Bewegungsmechanismus führt zu einer hervorragenden Gleichmäßigkeit in der Transportgeschwindigkeit der Stückgüter unabhängig von deren Gewicht und Größe. Auch Stückgüter mit hohem spezifischem Gewicht wie z. B. Getränkekisten werden ebenso schnell und mit nahezu konstant bleibender Transportgeschwindigkeit entlang der Rollenbahn transportiert wie besonders leichte Gebinde, z. B. Kartonverpackungen mit Kartoffelchips oder Gebinde mit Toilettenpapier. Bei geneigter Anordnung der Rollenbahn hat sich für die Erzielung einer solchen Vergleichsmäßigkeit als besonders geeignet ein Neigungswinkel der Rollenbahn von 2,5 bis 6 %, vorzugsweise 3 bis 3,5 % herausgestellt.

Eine bevorzugte Ausgestaltung der Transport- und/oder Lagervorrichtung ist gekennzeichnet durch einen Lagerbereich mit einer Vielzahl sich darin parallel zueinander erstreckender und aus Rollenbahnen bestehender Lagergassen für zu lagernde Waren.

Als gemeinsames Antriebsmittel kommt vorzugsweise eine endloser Antriebsriemen zum Einsatz. Dieser kann zur Erzielung eines geringen Antriebsschlupfes bei zugleich kostengünstiger Gestaltung der Rollenbahn jeweils zwischen dem Kraftübertragungselement und einem Druckwiderlager hindurchgeführt sein. Als Druckwiderlager werden Gegendruckrollen bevorzugt.

Vorzugsweise ist der Lagerabschnitt, auf dem die Buchse drehbar gelagert ist, ein am einen Ende der Rolle/Walze angeformter Zapfen, der einen geringeren Durchmesser als die Rolle/Walze selbst aufweist. Rolle bzw. Walze und Zapfen können in diesem Fall einstückig gefertigt sein, vorzugsweise aus Kunststoff.

Zur Erzielung eines gleichmäßigen Antriebes ist es ferner von Vorteil, wenn die Buchse an ihrem der Rolle bzw. Walze zugewandten Ende mit einem umlaufenden Bund versehen ist. Gegen diesen Bund kann der Antriebsriemen laufen ohne von der Antriebsfläche der Buchse seitlich abzurutschen.

Jede Lagergasse kann mit einer Entnahmevorrichtung versehen sein, und Bestandteile der Entnahmevorrichtungen können ein in den Förderweg der Rollenbahn ragendes, betätigbares Rückhalteelement sowie ein in Förderrichtung hinter dem Rückhalteelement angeordneter Horizontalförderer sein, dessen Fördergeschwindigkeit größer als die Fördergeschwindigkeit der Rollenbahn ist. Vorzugsweise ist die Fördergeschwindigkeit des Horizontalförderers mindestens 25 % größer als die Fördergeschwindigkeit der Rollenbahn. Erreicht wird auf diese Weise eine sichere und störungsfreie Trennung der jeweils vordersten, zu entnehmenden Ware von den dahinter angeordneten, über die Rollenbahn nachgeförderten Waren.

Mit dem Ziel einer kompakten Gestaltung der Vorrichtung wird vorgeschlagen, daß sich der Horizontalförderer aus einer angetriebenen ersten Riemenscheibe, mindestens einer weiteren, mitlaufenden Riemenscheibe sowie einem über die Riemenscheiben geführten, endlosen Riemen zusammensetzt, wobei die angetriebene Riemenscheibe das vordere Ende und die mitlaufende Riemenscheibe das hintere Ende des Horizontalförderers definiert.

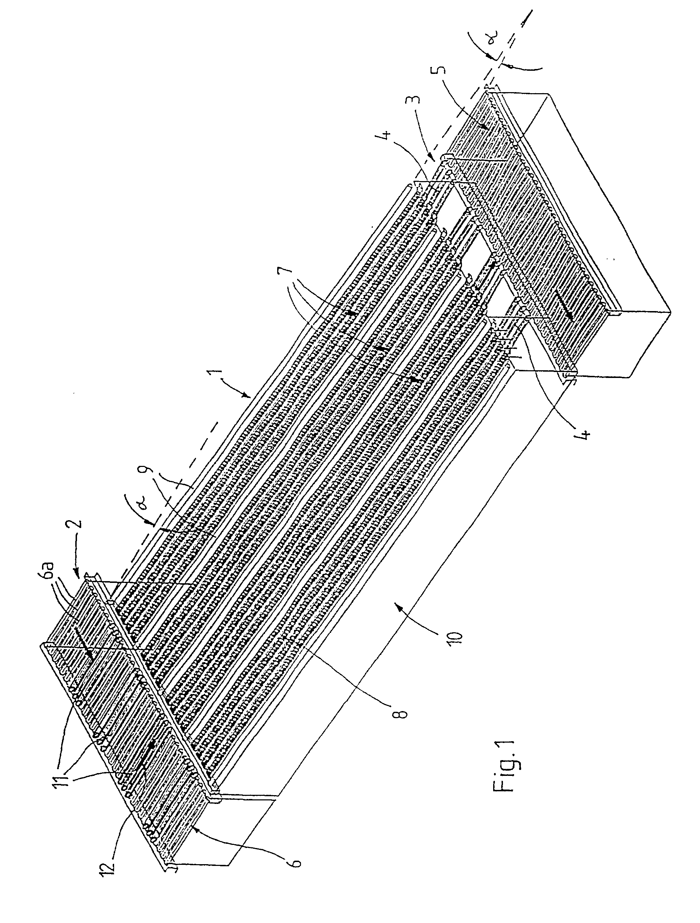

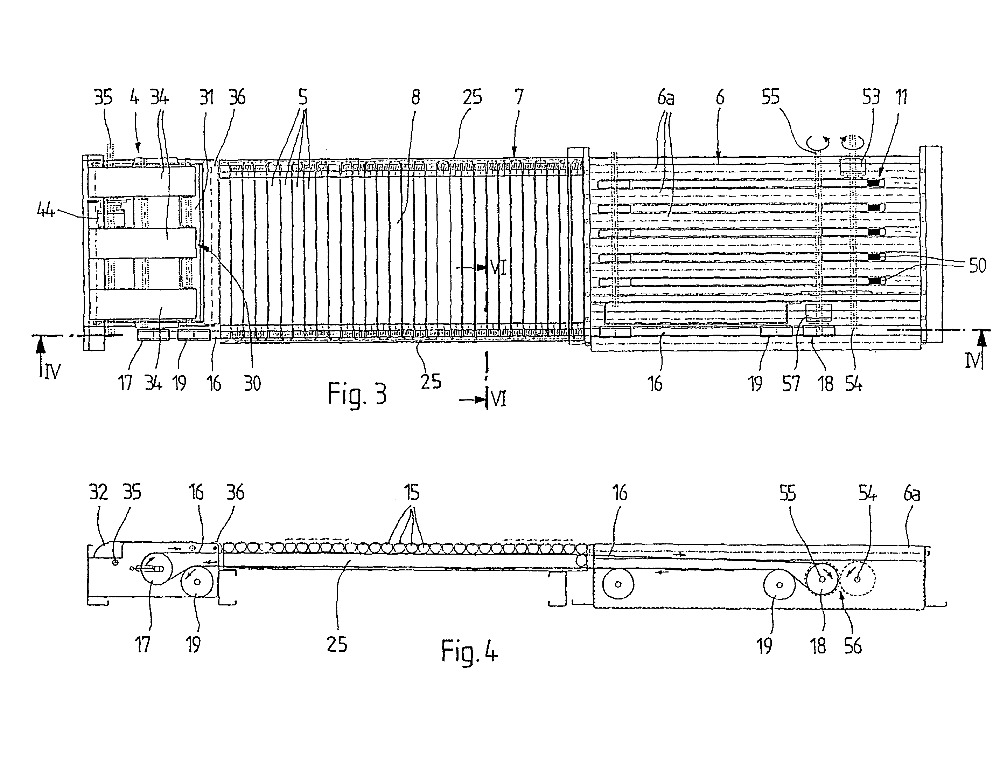

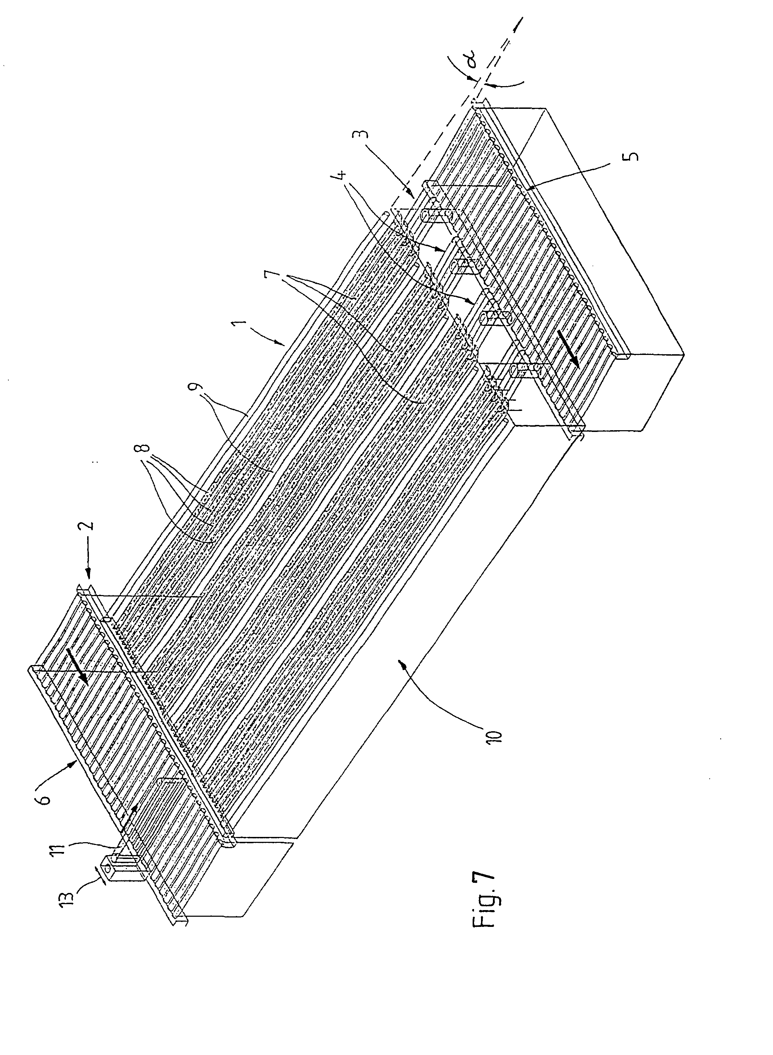

Nachfolgend werden erfindungsgemäße Vorrichtungen anhand von Ausführungsbeispielen und unter Bezugnahme auf die Zeichnungen erläutert. Die Fign. 1 bis 6 sowie 10 bis 12 zeigen ein erstes Ausführungsbeispiel eines Kommissionierlagers, die Fign. 7 bis 15 ein zweites Ausführungsbeispiel eines Kommissionierlagers. Im einzelnen zeigen die Zeichnungen:
- Fig. 1: in perspektivischer Darstellung einen Teil eines sich aus einem Bestükkungsbereich, einem Lagerbereich und einem Kommissionierbereich zusammensetzenden Kommissionierlagers;
- Fig. 2: eine Draufsicht auf einen Teil des Kommissionierlagers in vergrößerter Darstellung, wobei aus Gründen der Übersicht der Lagerbereich stark verkürzt dargestellt ist;
- Fig. 3: eine in etwa der Fig. 2 entsprechende Einzeldarstellung einer Lagergasse mit zugehörigem Bestückungsbereich sowie zugehöriger Entnahmevorrichtung;
- Fig. 4: eine Lagergasse in einem Schnitt gemäß der Linie IV - IV der Fig. 3;
- Fig. 5: in sechs Verfahrensstadien Einzelheiten der Entnahme der Waren auf der Kommissionierseite des Kommissionierlagers;
- Fig. 6: in sechs Verfahrensstadien Einzelheiten der Beschickung der Lagergasse im Bestückungsbereich des Kommissionierlagers;
- Fig. 7: in perspektivischer Darstellung einen Teil eines sich aus einem Bestückungsbereich, einem Lagerbereich und einem Kommissionierbereich zusammensetzenden Kommissionierlagers;
- Fig. 8: eine Draufsicht auf einen Teil des Kommissionierlagers in vergrößerter Darstellung, wobei aus Gründen der Übersicht der Lagerbereich stark verkürzt dargestellt ist;
- Fig. 9: eine Seitenansicht einer Lagergasse des Kommissionierlagers nach den Fign. 7 und 8;
- Fig. 10: die Seitenansicht der Lagergassen nach den Fign. 4 und 9 in vergrößerter, ausschnittsweiser Darstellung;
- Fig. 11: eine Draufsicht auf einen Seitenbereich der Lagergasse nach Fig. 10;
- Fig. 12: einen Teilschnitt entlang der Linie VI-VI der Fig. 3 bzw. entlang der Linie XII-XII der Fig. 11;
- Fig. 13: in sechs Verfahrensstadien Einzelheiten der Entnahme der Waren auf der Kommissionierseite des Kommissionierlagers;
- Fig. 14a: eine Ausschnittsvergrößerung der ersten Teilfigur der Fig. 13;
- Fig. 14b: eine Auschnittsvergrößerung der zweiten Teilfigur der Fig. 13 und
- Fig. 15: in einer Seitenansicht Einzelheiten eines im Bestückungsbereich des Kommissionierlagers angeordneten Querförderers.

Das Kommissionierlager für Stückgüter einschließlich gefüllter Getränkekisten und für Lebensmittel in Kartongebinden, die im Großhandel eine sehr hohe Umschlagrate haben, setzt sich in erster Linie aus einem Lagerbereich 1, einem dem Lagerbereich 1 vorgeschalteten Bestückungsbereich 2 und einem dem Lagerbereich 1 nachgeschalteten Kommissionierbereich 3 zusammen. In dem Bestükkungsbereich 2 erfolgt die Einlagerung neu einzulagernder Stückgüter in den richtigen Lagerort innerhalb des Lagerbereiches 1. In dem Kommissionierbereich 3 werden die einzelnen Stückgüter entsprechend der Kommission rechnergesteuert aus dem Lagerbereich 1 entnommen und an einen Ort gefördert, an dem dann die Zusammenstellung und gegebenenfalls Verpackung der Kommissionen zu größeren Verpackungsgebinden erfolgt. Zur Entnahme der einzelnen Waren aus dem Lagerbereich 1 sind Entnahmevorrichtungen 4 vorgesehen, die die aus dem Lagerbereich 1 einzeln entnommenen Waren auf eine nachgeordnete Transportbahn 5 ablegen, entlang der dann der Weitertransport der Waren erfolgt.

Auch die Zuförderung der Waren im Bestückungsbereich 2 erfolgt mittels einer kontinuierlich angetriebenen Transportbahn 6, die sich, ebenso wie die Transportbahn 5 des Kommissionierbereichs 3, aus einer Vielzahl angetriebener Transportwalzen 6a zusammensetzen kann, auf denen die transportierten Stückgüter entlangrollen.

Der Lagerbereich 1 setzt sich aus einer Mehrzahl parallel zueinander ausgerichteter Lagergassen 7 zusammen. Die Lagergassen 7 können in Richtung auf die Entnahmevorrichtungen 4 hin leicht abschüssig geneigt sein und bestehen aus Rollenbahnen 8 aus Rollen oder Walzen, die zu ihren beiden Seiten in Profilen gelagert sind. Durch Begrenzungen 9 sind die einzelnen Lagergassen 7 voneinander getrennt, so daß Waren während des Transportes entlang der Lagergassen nicht versehentlich in benachbarte Lagergassen gelangen können. Im Rahmen der nachfolgend näher erläuterten Ausgestaltungen kann die Funktion der Begrenzungen 9, d. h. die seitliche Führung der Waren, auch durch Spurkränze an den Rollen bzw. Walzen erzielt werden.

In jeder Lagergasse 7 befinden sich ausschließlich Waren bzw. Stückgüter derselben Art. Bei dem in Fig. 1 dargestellten, aus insgesamt vier Lagergassen bestehenden Lagerbereich 1 ist daher eine Lagerung von vier unterschiedlichen Warenarten möglich. Die Waren derselben Warenart sind hintereinander liegend in der jeweiligen Lagergasse 7 angeordnet, wobei sie sich infolge eines nachfolgend noch näher beschriebenen Antriebes der Rollenbahn bis an das dem Kommissionierbereich 3 zugewandte Ende der Lagergasse 7 bewegen, und die vorderste Ware dort an einem Rückhalteelement festgehalten wird. Der Transport der Waren entlang der Rollenbahnen 8 kann durch die Wirkung der Schwerkraft bei abschüssiger Neigung der Rollenbahnen unter dem in Fig. 1 eingezeichneten Winkel α unterstützt werden.

Die in Fig. 1 dargestellten insgesamt vier Lagergassen 7 bilden gemeinsam ein Modul 10. Mehrere solcher Module können nebeneinander angeordnet werden, so daß sich, abhängig von den räumlichen Gegebenheiten, bis zu 100 Lagergassen nebeneinander und mit gemeinsamen Einrichtungen des Bestückungsbereichs 2 und des Kommissionierbereichs 3 anordnen lassen. Zusätzlich kann das dargestellte Kommissionierlager auch mehrfach übereinander angeordnet werden, um so eine Vervielfachung der Platzausnutzung zu erreichen.

Die Transportbahn 6 ist allen Lagergassen 7 gemeinsam, weshalb über die Transportbahn 6 auch Waren unterschiedlicher Art herangefördert werden. Um diese Waren in die jeweils richtige Lagergasse 7 einzuordnen, ist vor jeder Lagergasse ein eigener Querförderer 11 mit Förderrichtung 12 in Richtung auf die Lagergasse angeordnet. Die Ansteuerung des jeweiligen Querförderers 11 erfolgt vollautomatisch in Abhängigkeit von der jeweils über die Transportbahn 6 zugeführten Warengruppe. Deren Identifizierung kann z. B. anhand eines Barcodes erfolgen, der sich auf den Stückgütern befindet.

Fig. 1 läßt als reine Prinzipdarstellung nicht erkennen, daß sich auf der anderen, den Lagergassen 7 abgewandten Seite der Transportbahn 6 ein zweiter Kommissionierbereich befinden kann, so daß sich über die Transportbahn 6 zu beiden Seiten hin Kommissionierbereiche beschicken lassen. Selbstverständlich sollte in diesem Fall auch der Querförderer 11 in beiden Richtungen transportieren können.

In dem Kommissionierbereich 3 werden die Waren mittels der Entnahmevorrichtung 4 einzeln aus den Lagergassen 7 entnommen und auf die gemeinsame Transportbahn 5 überführt, die sich quer zu den Lagergassen erstreckt. Jeder einzelnen Lagergasse 7 ist eine eigene Entnahmevorrichtung 4 zugeordnet, weshalb Waren zugleich aus mehreren Lagergassen 7 entnommen und auf die hinreichend breit gestaltete Transportbahn 5 überführt werden können.

Einzelheiten und Funktionsweise der Rollenbahnen 8 des Lagerbereichs werden nachfolgend erläutert.

Die Walzen 15 sind über ein vorzugsweise sämtlichen Walzen der Rollenbahn gemeinsames Antriebsmittel in Drehung versetzbar. Dieses gemeinsame Antriebsmittel ist ein endloser Antriebsriemen 16, der über Umlenkrollen 17, 18 geführt ist. Die Umlenkrolle 17 befindet sich unter dem Kommissionierbereich 3, und die Umlenkrolle 18 unter dem Bestückungsbereich 2 des Kommissionierlagers. Zusätzlich vorgesehen sind geeignete Spannrollen 19, die den für den ordnungsgemäßen Transport des Antriebsriemens 16 erforderlichen Spanndruck auf den Antriebsriemen erzeugen. Diese Spannung kann jedoch auch unmittelbar über die Umlenkrollen 17 bzw. 18 erzeugt werden.

Damit der Antriebsriemen 16 sicher auf die Walzen 15 wirkt, muß die sich ergebende Reaktionskraft aufgenommen werden. Hierzu dient ein Druckwiderlager, welches sich in Gestalt einer durchgehenden Fläche über die gesamte Länge der Rollenbahn 8 erstreckt. Der Obertrum des Antriebsriemens 16 wird also zwischen dem Druckwiderlager und den einzelnen Walzen 15 hindurchgezogen. Als Druckwiderlager kann die flache Oberseite eines Profils dienen, welches in ein Rollenbahnprofil 25 eingesetzt ist. Ein äußerer Schenkel des Rollenbahnprofils 25 dient der Lagerung der einzelnen Rollen bzw. Walzen 15. Die Rollen bzw. Walzen 15 sind hierzu mit kurzen Achsen versehen, die über aufsteckbare Clips an dem äußeren Schenkel des Rollenbahnprofils 25 befestigt sind. Solche Clips ermöglichen es, einzelne Walzen schnell und einfach gegen andere Walzen auszutauschen. Beim Rücktransport läuft der Untertrum des Antriebsriemens 16 innerhalb des Rollenbahnprofils 25.

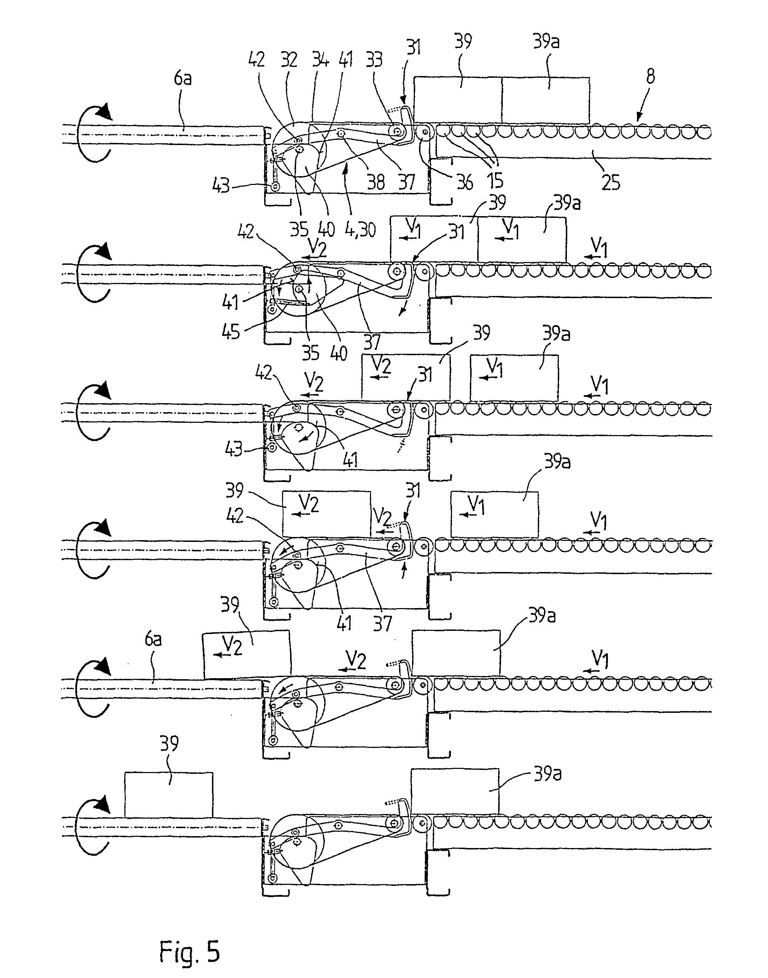

Anhand der Fig. 5 werden nachfolgend Einzelheiten und Funktionsweise der Entnahmevorrichtungen 4 erläutert.

Jede Entnahmevorrichtung 4 setzt sich aus einem Horizontalförderer 30 und einem Rückhalteelement 31 zusammen. Der Horizontalförderer 30, dessen Förderebene gleich der Förderebene der Rollenbahn 8 ist, besteht aus zwei Riemenscheiben 32, 33, über die ein breiter Riemen 34 geführt ist. Jeder Horizontalförderer 30 besteht aus insgesamt drei dieser Riemen 34. Die Riemenscheibe 32, welche weiter von der Rollenbahn 8 entfernt ist, ist angetrieben und sitzt hierzu unmittelbar auf einer Antriebswelle 35. Die Antriebswelle 35 ist kontinuierlich angetrieben und treibt gleichzeitig die Horizontalförderer 30 mehrerer Lagergassen an. Alle Horizontalförderer 30 laufen daher im Dauerbetrieb. Anders als die Riemenscheibe 32, ist die jeweils andere Riemenscheibe 33 des Horizontalförderers 30 nicht angetrieben. Die Riemenscheibe 33 befindet sich möglichst nahe an der Rollenbahn 8. Beim Ausführungsbeispiel befindet sie sich zwischen der Riemenscheibe 33 und der nächstgelegenen Walze 15 der Rollenbahn noch eine kleinere, frei mitlaufende Rolle 36.

Bestandteil des Rückhalteelements 31 der Entnahmevorrichtung 4 ist ferner ein Hebel 37, an dessen Ende sich das Sperrorgan des Rückhalteelements befindet. Der Hebel 37 ist an einer horizontalen Achse 38 gelagert. Das Rückhalteelement 31 ist zwischen zwei Stellungen um die Achse 38 hin- und herschwenkbar. In der ersten Stellung welche in Fig. 5 oben dargestellt ist, ragt das Sperrorgan des Rückhalteelements 31 in den Förderweg für die Waren 39. In seiner anderen Stellung senkt sich das Rückhalteelement 31 bis in die Förderebene oder darunter ab. Diese Stellung des Rückhalteelementes 31 ist in den an zweiter und dritter Stelle dargestellten Verfahrensstadien der Fig. 5 zu entnehmen.

Um das Rückhalteelement 31 aus seiner Sperrstellung in seine Entsperrstellung zu überführen, ist ein Nocken 40 vorgesehen, der auf einer zu der Antriebswelle 35 koaxialen Achse gelagert ist. Der Nocken 40 verfügt über eine Nockenfläche 41, die an einer Rolle 42 abläuft, wobei die Rolle 42 sich an dem Hebel 37 befindet. Beim Ausführungsbeispiel ist der Hebel 37 ein zweiarmiger Hebel, wobei sich am Ende des einen Arms das Sperrorgan befindet, wohingegen auf der Länge des anderen Arms die Rolle 42 gelagert ist.

Wird der Nocken 40, wie dies im Wechsel vom ersten Verfahrensstadium der Fig. 5 auf das zweite Verfahrensstadium erkennbar ist, um ca. 90° verschwenkt, führt dies infolge des Zusammenwirkens der Nockenfläche 41 mit der Rolle 42 zu einem Verschwenken des Hebels 37, wodurch sich das Rückhalteelement 31 bis unter die Förderebene der Rollenbahn absenkt. Die erste Ware 39 wird von diesem Zeitpunkt an nicht mehr durch das Rückhalteelement 31 zurückgehalten und rollt daher, angetrieben durch die Rollenbahn sowie gegebenenfalls zusätzlich durch die Schwerkraft, auf den Horizontalförderer 30. Sobald die Unterseite der ersten Ware 39 in Kontakt mit dem Riemen 34 des Horizontalförderers 30 kommt, folgt die Ware 39 fortan der Geschwindigkeit des Horizontalförderers 30. Diese ist - abhängig vom Warengewicht - um mindestens 25 % höher eingestellt, als die Fördergeschwindigkeit der Rollenbahn 8. Infolge dieser höheren Geschwindigkeit auf dem Horizontalförderer 30 trennt sich die erste Ware 39 von der nachfolgenden Ware 39a. In Fig. 5 ist dies mit den unterschiedlichen Geschwindigkeiten V₂ und V₁ wiedergegeben, wobei V₂ größer als V₁ ist.

In dem dritten Verfahrensstadium gemäß Fig. 5 überrollt die Ware 39, gefördert nahezu ausschließlich durch den Horizontalförderer 30 mit dessen Geschwindigkeit, das Rückhalteelement 31. Zu diesem Zeitpunkt hat sich der Nocken 40 infolge einer Zeitsteuerung bereits wieder abgesenkt. Gleichwohl verharrt das Rückhalteelement 31 in seiner abgesenkten Stellung, da seine Rückstellkraft geringer ist, als das Gewicht der Ware 39. Die genannte Rückstellkraft wird durch ein Gegengewicht 43 erzeugt, welches am zweiten Arm des Hebels 37 hängt. Erst wenn, wie dies im vierten Verfahrensstadium der Fig. 5 dargestellt ist, die Unterseite der Ware 39 über das Rückhalteelement 31 hinweggelangt ist, kann der Hebel 37 des Rückhalteelements unter der Wirkung des Gegengewichtes 43 wieder nach oben schwenken. Fortan ist die Bahn wieder blockiert, so daß die nachfolgende Ware 39a an dem Rückhalteelement 31 gestoppt wird. Es kann dann der nächste Entnahmevorgang eingeleitet werden, wobei sich das Verfahren wiederholt. Die von dem Horizontalförderer 30 abgeförderte Ware 39 gelangt auf die Transportwalzen 6a der kontinuierlich angetriebenen Transportbahn 5.

Der Antrieb des Nockens 40 wird von der kontinuierlichen Drehbewegung der Antriebswelle 35 abgeleitet. Hierzu sitzt auf der Antriebswelle 35 eine elektrische Magnetkupplung 44, deren Abtriebsteil der Nocken 40 ist. Nur bei der zeitlich begrenzten Erregung der Magnetkupplung 44 erfolgt daher eine Betätigung des Nokkens 40 und damit die Entsperrung des Rückhalteelements 31. Die hierfür aufzubringende Antriebskraft ist relativ gering, weshalb für den Antrieb des Nockens 40 bereits eine kleine Magnetkupplung auf der Antriebswelle 35 ausreicht. Eine Zugfeder 45 zieht den Nocken 40 in seine Ruhestellung zurück.

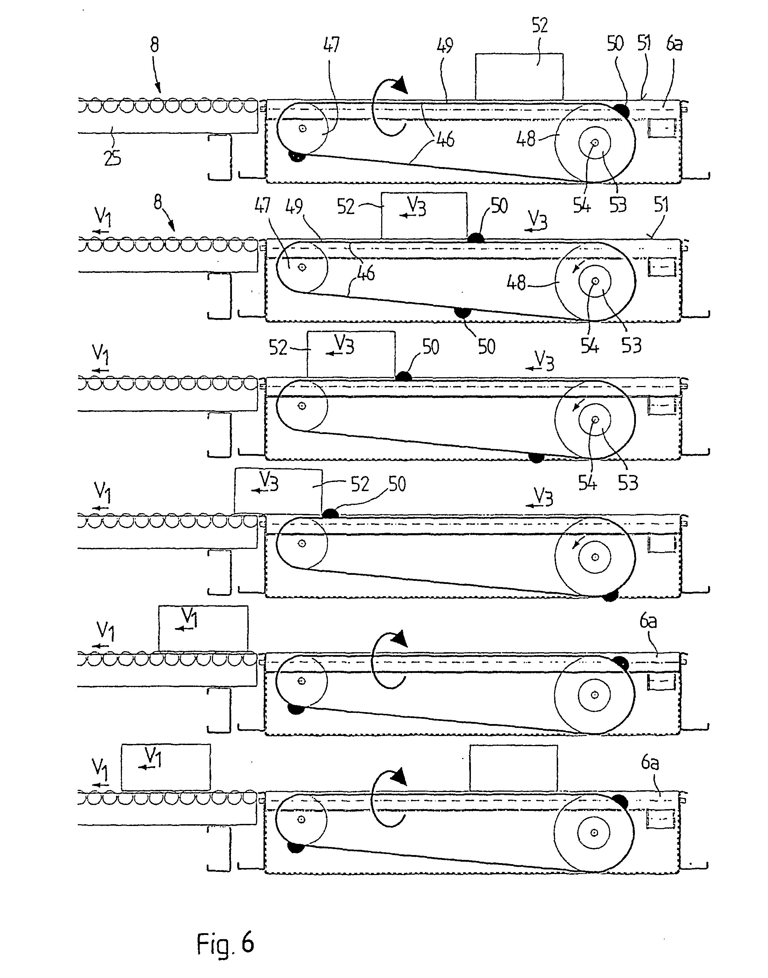

Anhand der Fig. 6 werden nachfolgend Einzelheiten und Funktionsweise des Querförderers 11 im Bestückungsbereich 2 des Kommissionierlagers erläutert. Vor jeder Lagergasse befindet sich ein eigener, dieser Lagergasse zugewiesener Querförderer 11. Der Querförderer 11 arbeitet, ebenso wie dies voranstehend für den Kommissionierbereich erläutert wurde, unter Verwendung endloser Riemen 46, die über Riemenscheiben 47, 48 geführt sind. Zur Vermeidung von Schlupf sind Riemen 46 und Riemenscheiben 47, 48 mit ineinandergreifenden Verzahnungen versehen. Auch eine Kette anstelle des Riemens 46 sowie Ritzel anstelle der Riemenscheiben 47, 48 sind einsetzbar.

Der Obertrum 49 des Riemens 46 befindet sich etwas tiefer, als die Oberseite der Transportwalzen 6a. Riemen 46 und die Riemenscheiben 47, 48 sind relativ schmal gestaltet, so daß sie zwischen zwei aufeinanderfolgenden Transportwalzen 6a der Transportbahn 6 Platz finden. Auf der Außenseite jedes endlosen Riemens 46 sind Mitnehmerelemente 50 angeordnet, die zusammen mit dem Riemen 46 umlaufen können. Die Mitnehmerelemente 50 ragen, wenn sie sich auf dem Obertrum des Antriebsriemens 46 befinden, bis über die Förderfläche 51 der Transportbahn 6.

Die oberste Darstellung in Fig. 6 läßt erkennen, daß der Abstand der Mitnehmerelemente 50 etwas größer ist, als die Länge des Obertrums 49. Auf diese Weise ragt in dem Verfahrensstadium, wie es in Fig. 6 an oberster Stelle dargestellt ist, keines der beiden Mitnehmerelemente 50 über die Förderfläche 51 und damit in den Förderweg der Transportbahn. Erst nach dem Einschalten des Querförderers 11 taucht der äußere der beiden Mitnehmerelemente 50 auf und ergreift die Ware 52, so daß diese längs der jeweiligen Transportwalzen 6a bis in die Lagergasse 7 hineingeschoben wird. Beim Ausführungsbeispiel sind insgesamt zwei Mitnehmerelemente 50 vorgesehen. jedoch kann deren Anzahl auch geringer oder größer sein, was letztlich von der Breite der Transportbahn 6 abhängt.

Der Antrieb der Transportriemen 46 des Querförderers 11 erfolgt ebenfalls unter Verwendung von Magnetkupplungen 53. Die Magnetkupplungen 53 sitzen auf einer allen Querförderern 11 gemeinsamen Hauptantriebswelle 54 und lassen sich für jede Lagergasse getrennt ansteuern. Bei Bestromung stellen die Magnetkupplungen 53 eine Momentenverbindung der Riemenscheibe 48 mit der Hauptantriebswelle 54 her, wodurch der jeweilige Antriebsriemen 46 solange in Betrieb gesetzt wird, wie die Magnetkupplung 53 bestromt ist.

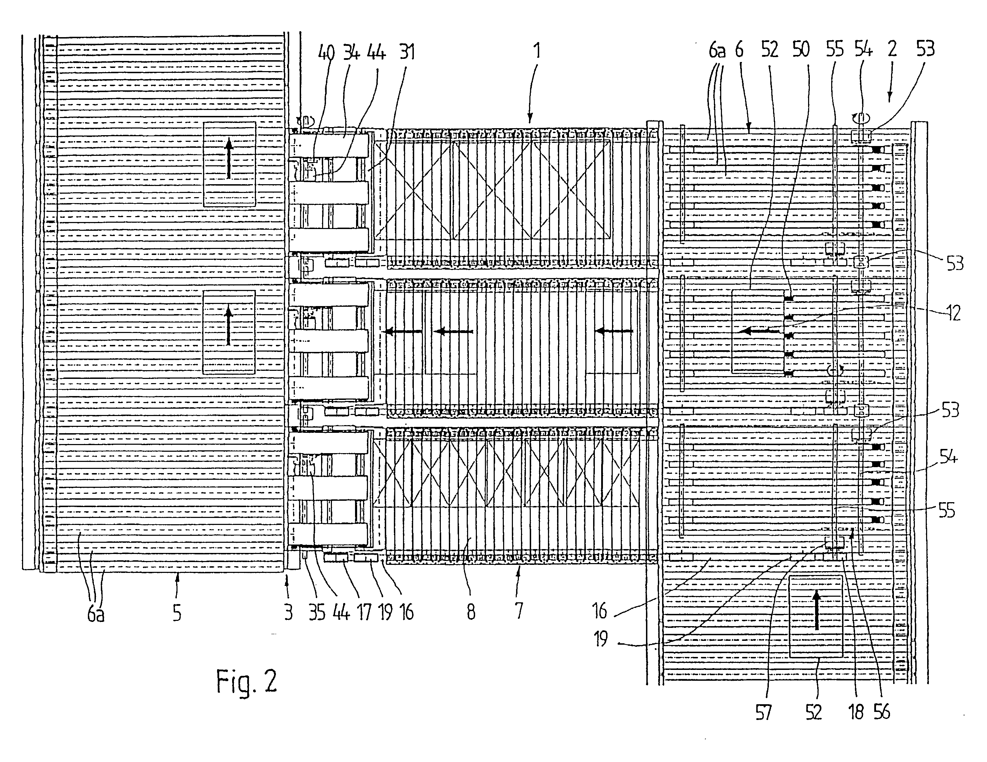

Insbesondere Fig. 2 läßt erkennen, daß von der Hauptantriebswelle 54 nicht nur die Bewegung sämtlicher Querförderer 11 abgeleitet wird, sondern auch der Antrieb der Rollenbahn 8. Hierzu erstreckt sich parallel zu der Hauptantriebswelle 54 eine weitere Welle 55, wobei der Antrieb der weiteren Welle 55 mittels eines Umkehrgetriebes 56 von der Hauptantriebswelle 54 abgeleitet wird. Das Umkehrgetriebe 56 besteht aus zwei gegenläufigen Zahnrädern, die drehmomentfest auf Hauptantriebswelle 54 bzw. Welle 55 sitzt. Über eine weitere Magnetkupplung 57 sitzt auf der Welle 55 die Umlenkrolle 18, welche die Antriebsrolle für den Antriebsriemen 16 ist. Während also die Welle 55, angetrieben durch die Hauptantriebswelle 54, dauernd läuft, erfolgt eine Drehmomentübertragung auf die Umlenkrolle 18 nur bei Betätigung der Magnetkupplung 57. Auf diese Weise ist es möglich, gesteuert durch die Magnetkupplung 57, die jeweilige Rollenbahn 8 nur bei Bedarf anzutreiben. Dies ist dann der Fall, wenn im Bestückungsbereich 2 neue Waren in die Lagergasse eingelagert werden sollen, oder im Kommissionierbereich eine Ware aus dieser Lagergasse entnommen werden soll. Ansonsten kann die Rollenbahn dieser Lagergasse durch Nichtbetätigung der Magnetkupplung 57 ruhen, so daß die dortige Ware nicht unnötig durch Reibung belastet wird.

Schließlich läßt Fig. 2 noch erkennen, daß sich jeder Querförderer 11 aus mehreren Transportriemen 46 zusammensetzt, beim Ausführungsbeispiel jeweils vier Transportriemen. Hierdurch wird ein besserer und ruhigerer Quertransport der Waren 52 in die jeweilige Lagergasse erzielt. Während dieses Quertransportes stehen die Transportwalzen 6a der Transportbahn 6 still.

In Fig. 7 ist in Übersichtsdarstellung eine zweite Ausführungsform des Kommissionierlagers dargestellt. Abweichend von der Ausführungsform nach den Fign. 1 bis 6 ist im Bestückungsbereich 2 ein für eine Mehrzahl von Lagergassen 7 gemeinsamer Querförderer 11 vorgesehen, der entlang der Transportbahn 6 in eine Position vor jeder der Lagergassen 7 einstellbar ist.

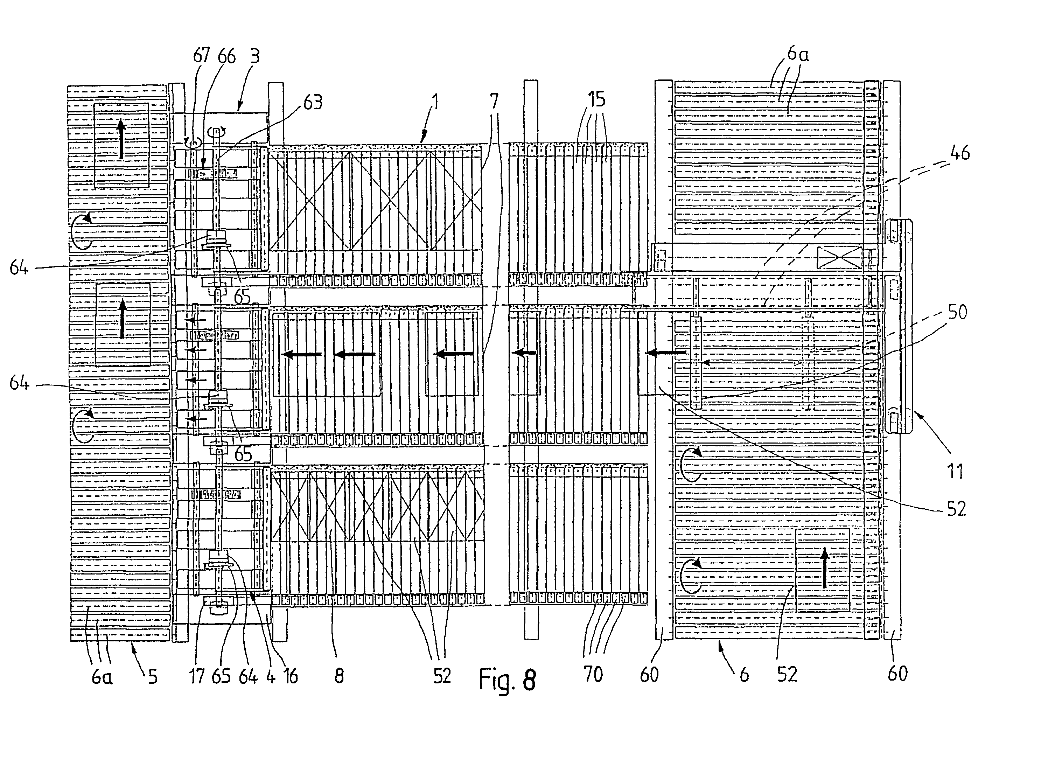

Die Draufsicht Fig. 8 läßt erkennen, daß sich entlang beider Längsseiten der Transportbahn 6 Schienen 60 erstrecken, auf denen der Querförderer 11 verschiebbar ist, wozu der Querförderer über einen geeigneten Antrieb verfügt.

Wiederum besteht, wie Fig. 15 erkennen läßt, der Querförderer aus einem endlos umlaufenden Riemen 46 oder einer entsprechenden endlosen Kette. Riemen 46 bzw. Kette sind über Riemenscheiben 47, 48 geführt, so daß sich ein Obertrum 61 und ein Untertrum 62 ergeben. An dem Riemen bzw. der Kette befestigt sind die zwei Mitnehmerelemente 50, die, sobald sie sich auf der Höhe des Untertrums 62 des Antriebsriemens 46 befinden, unmittelbar über die Förderfläche 51 der Transportbahn 6 ragen. Wird der Querförderer 11 eingeschaltet, führt dies zu einem Antrieb des Riemens 46 bzw. der Kette, wobei das jeweils nächste Mitnehmerelement 50, sobald dieses die Höhe des Untertrums 62 erreicht, die dort befindliche Ware 52 ergreift, wodurch diese längs der jeweiligen Transportwalzen 6a bis in die Lagergasse 7 hineingeschoben wird. Beim Ausführungsbeispiel sind insgesamt zwei Mitnehmerelemente 50 vorgesehen, jedoch kann deren Anzahl auch geringer oder größer sein, was letztlich von der Breite der Transportbahn 6 abhängt. Werden nur zwei Mitnehmerelemente 50 verwendet, befinden sich diese während der Stillstandspausen in jenen Positionen, wie sie in Fig. 15 eingezeichnet sind, d. h. der die nächste Ware 52 mitnehmende Mitnehmer 50 befindet sich bereits auf dem Untertrum 62 und damit auf Höhe der Ware gleichsam in einer Warteposition.

Fig. 8 läßt noch erkennen, daß die Mitnehmer 50 langgestreckte, horizontale Walzen mit Drehachse quer zur Verschieberichtung sind.

Bei dem Kommissionierlager gemäß den Fign. 7 bis 15 erfolgt der Antrieb der Rollenbahnen 8 mittels einer Hauptantriebswelle 63, die sich im Kommissionierbereich 3 befindet. Diese Hauptantriebswelle 63 ist einheitlich für ein ganzes Modul 10 des Kommissionierlagers. Gemäß Fig. 7 besteht das Modul 10 aus insgesamt vier Lagergassen. Jedoch läßt sich ein Modul auch aus sechs oder acht Lagergassen kombinieren, die dann über eine eigene Antriebsquelle für die Hauptantriebswelle 63 verfügen. Diese Antriebsquelle wird eingeschaltet, sobald in einer der Lagergassen des betreffenden Moduls 10 Waren zu fördern sind, sei dies nun eine Förderung entlang einer der Rollenbahnen 8, oder eine Entnahmeförderung mittels einer der Entnahmevorrichtungen 4 des Moduls.

Die Hauptantriebswelle 63 ist für jede Lagergasse 7 mit einer Umlenkrolle 17 versehen, weiche drehfest mit der Hauptantriebswelle 63 verbunden ist. Über die Umlenkrolle 17 ist der Antriebsriemen 16 für die Rollen bzw. Walzen der Rollenbahn 8 geführt. Ferner sitzen auf der Hauptantriebswelle 63 für jede Lagergasse eine eigene Kupplung 64, die ebenso wie die bereits beschriebenen Magnetkupplungen, die Hauptantriebswelle 63 ringförmig umgibt. Die Kupplungen 64 sind elektrisch ansteuerbar und treiben bei Bestromung einen Nocken 65, 40 an, dessen Einzelheiten nachfolgend noch näher erläutert werden.

Über ein stark übersetzendes Stirnradgetriebe 66 aus Stirnrädern 66a, 66b ist die Hauptantriebswelle 63 mit einer für jede Lagergasse getrennten, parallelen Welle 67 verbunden, die den Horizontalförderer 30 der Entnahmevorrichtung antreibt.

Alternativ ist es auch möglich, die Welle 67 als Hauptantriebswelle zu nutzen, und hiervon über das Stirnradgetriebe 66 die Bewegung der Welle 63 mit den darauf sitzenden Kupplungen 64 abzuleiten.

Bei dem hier beschriebenen zweiten Ausführungsbeispiel werden daher sowohl der Antrieb der Rollenbahn, als auch der Antrieb der Entnahmevorrichtung direkt oder indirekt von der Hauptantriebswelle 63 abgeleitet.

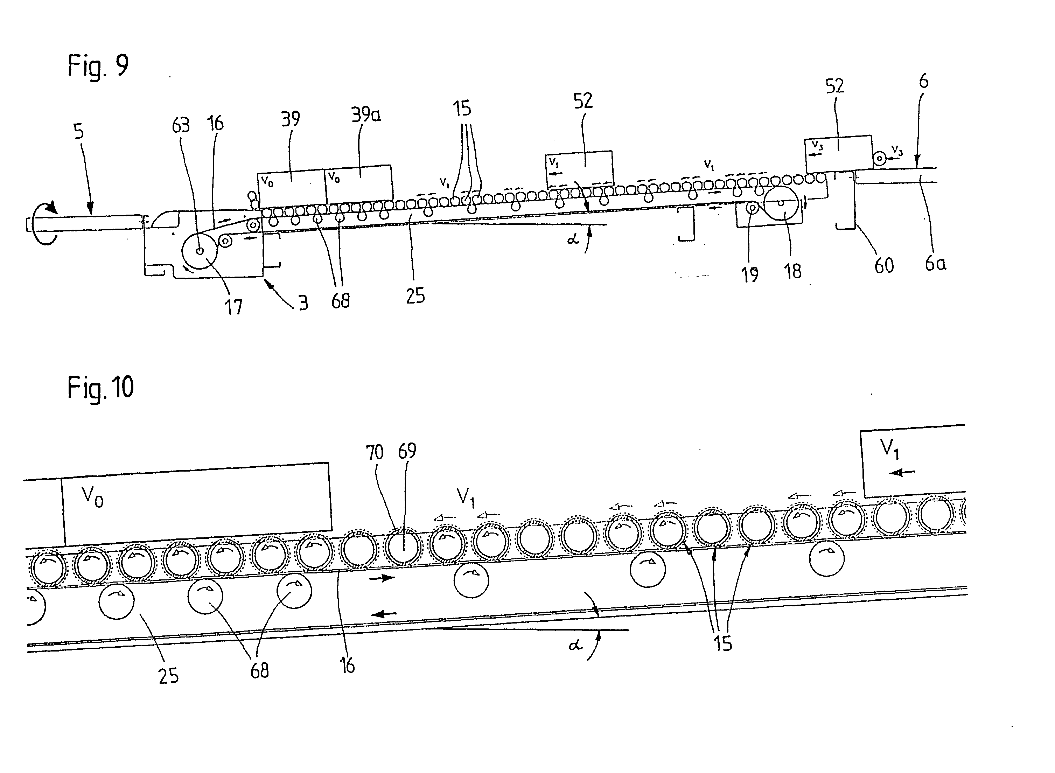

Der Antrieb der Rollenbahn muß nicht der einzige Transportmechanismus für die entlang der Rollenbahn transportierenden Waren sein. Gemäß Fig. 9 kann die Rollenbahn 8 außerdem abschüssig mit einem Winkel α bezüglich der Horizontalen geneigt sein, in welchem Fall die auf der Rollenbahn aufliegenden Waren zusätzlich unter Einwirkung der Schwerkraft entlang der Rollenbahn transportiert werden. Der Neigungswinkel α ist relativ gering und beträgt vorzugsweise nur 4 %.

Gemäß Fig. 9 erfolgt der Antrieb der einzelnen Rollen bzw. Walzen 15 der Rollenbahn 8 über den einmal über die Umlenkrolle 17, und zum anderen über die Umlenkrolle 18 geführten, endlosen Antriebsriemen 16. Nur die Umlenkrolle 17 wird, da sie drehfest auf der Hauptantriebswelle 63 sitzt, angetrieben, wohingegen die Umlenkrolle 18 frei läuft und ausschließlich der Umlenkung dient. Die Rolle 19 vor der Rolle 18 erlaubt die Einstellung der Antriebsriemen-Vorspannung.

Anhand der Fign. 10 bis 12 werden nachfolgend Einzelheiten des Antriebs der Walzen 15 erläutert. Der Antriebsriemen 16 besteht aus einem flachen, vorzugsweise gummierten Band, welches zwischen den Walzen 15 und Gegendruckrollen 68 hindurchgeführt ist. Die Gegendruckrollen 68 bilden in diesem Fall das Druckwiderlager. Auf zwei bis vier Walzen 15 kommt eine Gegendruckrolle 68.

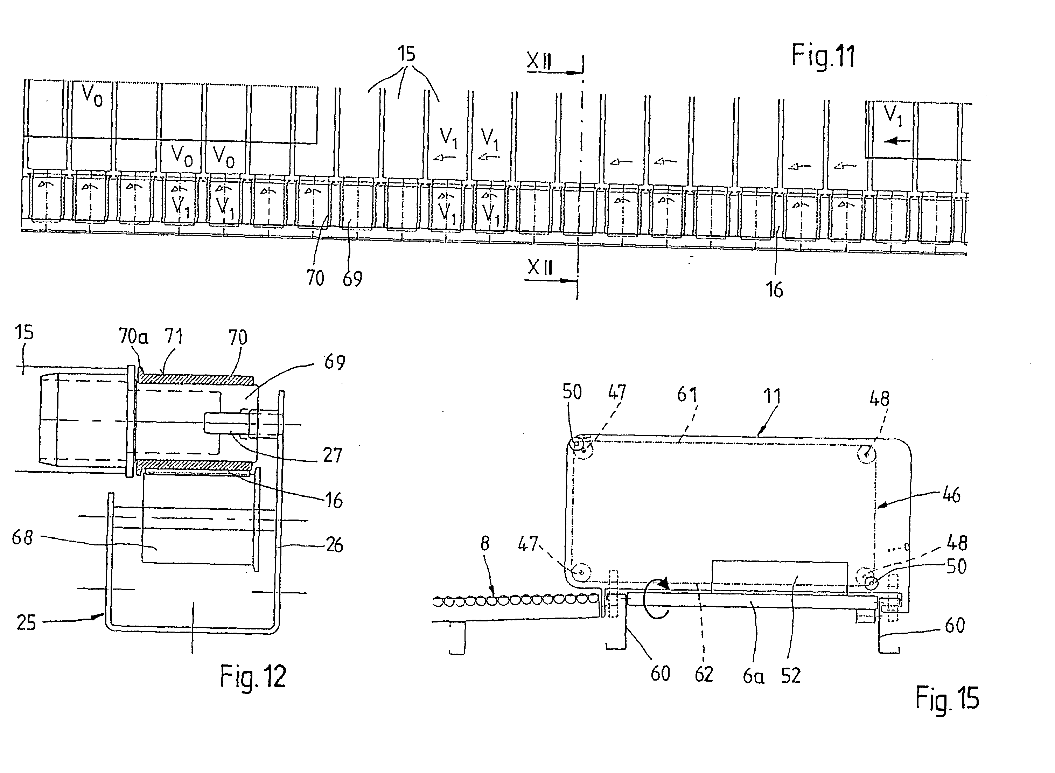

In Fig. 12 ist dargestellt, daß die Walzen 15 an jenen Enden, an denen mittels des Antriebsriemens 16 der Antrieb erfolgt, mit einem einstückig angeformten, zylindrischen Zapfen 69 versehen sind, der vorzugsweise einen geringeren Durchmesser aufweist, als der Walzenkörper selbst. Auf dem koaxial zum Walzenkörper angeordneten Zapfen 69 sitzt ein Kraftübertragungselement in Gestalt einer Buchse 70, an deren äußerer Mantelfläche 71 der Antriebsriemen 16 mit seiner Oberseite reibschlüssig anliegt. Die Buchse 70 ist an ihrem inneren Ende mit einem umlaufenden Bund 70a als Anschlag für den Antriebsriemen 16 versehen. Zapfen 69 und Buchse 70 sind vorzugsweise zylindrisch ausgebildet. Wesentlich ist, daß zwischen der Außenseite des Zapfens 69 und der Innenfläche der Buchse 70 nur eine geringe Reibung besteht, was z. B. durch eine geeignete Materialpaarung erreicht werden kann. Geeignet sind insbesondere leicht laufende Kunststoffe für Buchse 70 und Zapfen 69. Wesentlich ist, daß der Reibwert zwischen Zapfen 69 und Buchse 70 geringer ist, als der Reibwert zwischen Buchse 70 und der Oberseite des Antriebsriemens 16. Hierzu kann der Antriebsriemen 16 gummiert sein, oder er kann mit einer Zahnung versehen sein, die mit einer entsprechenden Zahnung auf der Außenseite der Buchse 70 kämmt.

Indem der Antriebsriemen 16 nicht unmittelbar auf die Walzen 15 einwirkt, sondern nur mittelbar über Kraftübertragungselemente, die beim Ausführungsbeispiel als Buchsen 70 gestaltet sind, erfolgt eine sanfte Übertragung der Antriebskraft auf die Walze 15. Sobald die Walze 15 gebremst wird, etwa infolge des Gewichtes des aufliegenden Warengebindes, führt dies zu einer Relativbewegung zwischen Zapfen 69 und Buchse 70, d. h der fest mit der Walze verbundene Zapfen 69 ruht, wohingegen sich die Buchse 70, angetrieben durch den Antriebsriemen 16, weiterdreht. Im Ergebnis erfolgt der Antrieb der Walzen mittels eines sich automatisch immer dann einstellenden Schlupfes, wenn der Widerstand der Walzen zu hoch wird. Letzteres ist immer dann der Fall, wenn sich die auf der Rollenbahn transportierten Waren an dem Rückhalteelement 31 der jeweiligen Entnahmevorrichtung 4 rückstauen. Dies führt daher nicht zu einer erhöhten Belastung des Antriebs der Rollenbahn oder einem erhöhten Staudruck der Stückgüter, vielmehr bleiben die Antriebskräfte und Staukräfte infolge des sich an den Walzen 15 automatisch einstellenden Schlupfes sehr gering.

Infolge der Verwendung der Buchsen 70 stellt sich sogar ein doppelter Effekt ein: die Walzen 15 werden nicht nur mit sanfter Kraft angetrieben, um z. B. besonders leichten Warengebinden einen einwandfreien Transport erst zu ermöglichen, sondern es kommt im Fall einer geneigten Rollenbahn auch zu dem Effekt eines Abbremsens der Walzen 15. Dieser Effekt wird in Verbindung mit besonders schwergewichtigen Waren erzielt. Diese neigen im Falle einer Neigung der Rollenbahn 8 dazu, durch ihr hohes Gewicht zu hohe Geschwindigkeiten auf der Rollenbahn zu erreichen. In diesem Fall wirken die langsamer angetriebenen Walzen 15 wie Bremskörper, wobei die Relativgeschwindigkeit wiederum durch den sich zwischen den Walzen 15 und den Buchsen 70 einstellenden, mit dosierter Reibung arbeitenden Schlupf ausgeglichen wird. Durch die Kombination der leicht geneigten Rollenbahn 8 mit den unter Schlupf arbeitenden Buchsen 70 werden daher überdurchschnittlich schwere Waren gebremst, und überdurchschnittlich leichte Waren aktiv transportiert. Insgesamt stellt sich damit eine Vergleichmäßigung ein, sowohl leichte wie auch schwere Waren sowie große und kleine Gebinde werden mit im wesentlichen derselben Geschwindigkeit entlang den Lagergassen transportiert.

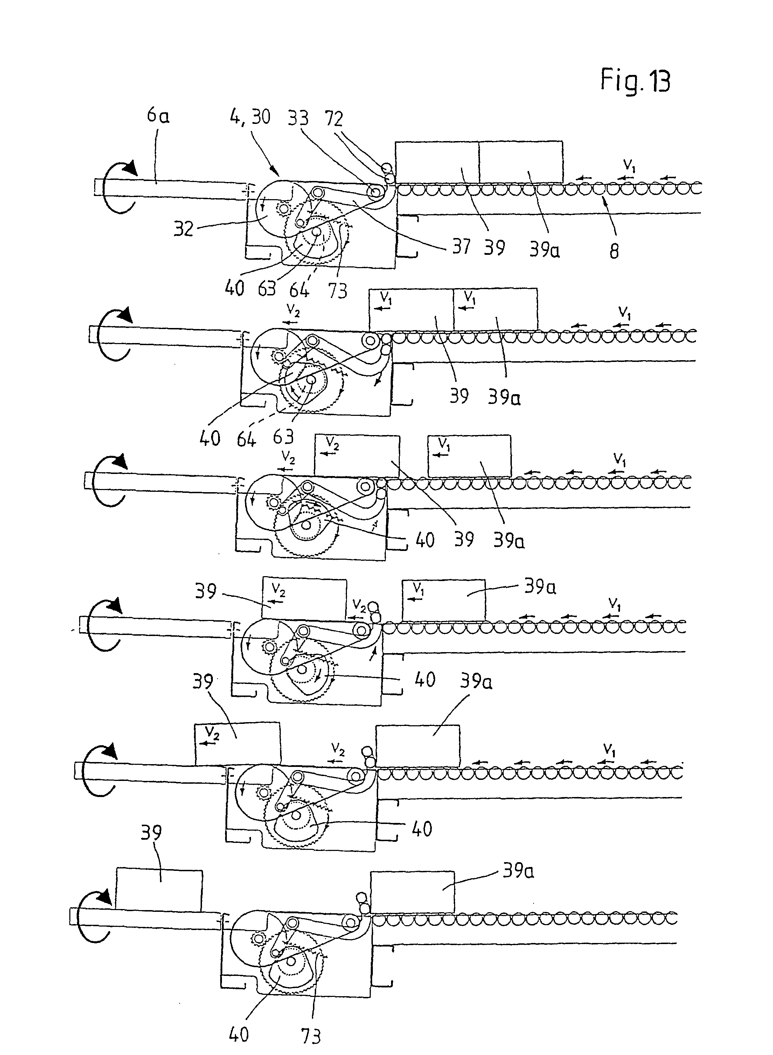

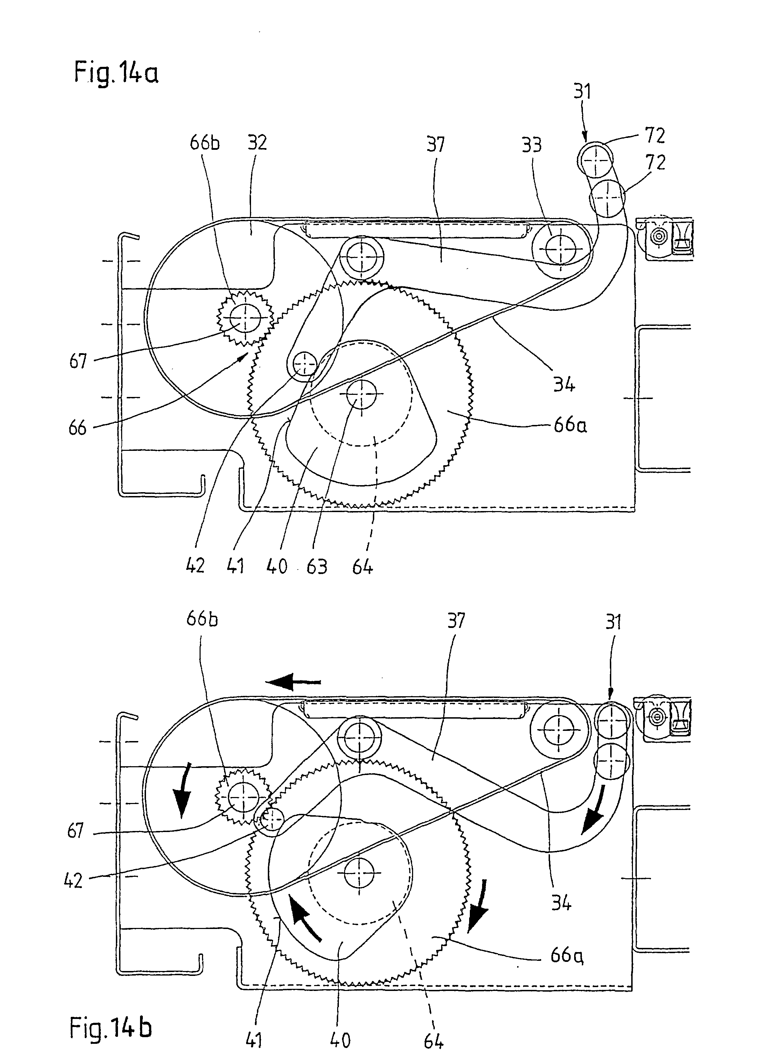

Der in den Fign. 13, 14a und 14b dargestellte Aufbau sowie die Funktionsweise der Entnahmevorrichtung 4 entsprechen im wesentlichen der Funktion sowie Arbeitsweise der Ausführungsform nach Fig. 5. Unterschiedlich ist die Gestaltung des Rückhalteelements 31. Dieses besteht aus zwei übereinander angeordneten, frei drehbaren Walzen 72. Der Vorteil dieser Walzen anstelle eines einfachen Bleches besteht in dem geringeren Reibungswiderstand beim Herunterziehen des Hebels 37. Außerdem läuft, wie die dritte Darstellung der Fig. 13 erkennen läßt, die gerade frei gegebene Ware 39 mit einem geringeren Widerstand über die Walze 72, als über ein starres Blech wie bei der Ausführungsform nach Fig. 5.

Zur Überführung des Rückhalteelements 31 aus seiner in Fig. 14a dargestellten Sperrstellung in seine in Fig. 14b dargestellte Endsperrstellung ist der Nocken 40 vorgesehen. Dieser verfügt über die Nockenfläche 41, die an der Rolle 42 des zweiarmigen Hebels 37 abläuft.

Wird der Nocken entsprechend den Fign. 14a und 14b um ca. 75° verschwenkt, führt dies infolge des Zusammenwirkens der Nockenfläche 41 mit der Rolle 42 des zweiarmigen Hebels 37 zu einem Verschwenken des Hebels 37, wodurch sich das Rückhalteelement 31 bzw. dessen als Sperrorgane dienenden Walzen 72 bis unter die Förderebene der Rollenbahn absenkt. Die erste Ware 39 rollt, angetrieben durch die Rollenbahn sowie gegebenenfalls. zusätzlich durch die Schwerkraft, auf den Horizontalförderer 30. Sobald die Unterseite der ersten Ware 39 in Kontakt mit dem Riemen 34 des Horizontalförderers 30 kommt, folgt die Ware 39 fortan der Geschwindigkeit des Horizontalförderers 30, die, abhängig vom Warengewicht, um mindestens 25 % höher eingestellt ist, als die Fördergeschwindigkeit der Rollenbahn 8.

Auch nachdem der Nocken 40 den Hebel 37 wieder freigibt, verharrt das Rückhalteelement 31 in seiner abgesenkten Stellung, da seine Rückstellkraft geringer ist, als das Gewicht der Ware 39. Die Rückstellkraft wird durch eine Zugfeder 73 erzeugt, welche am zweiten Arm des Hebels 37 eingehängt ist.

Bei der Entnahme einer Ware mittels der Entnahmevorrichtung führt der Nocken 40 eine vollständige Umdrehung, d. h. eine Drehung um 360° aus. Sein Antrieb wird von der kontinuierlichen Drehbewegung der Hauptantriebswelle 63 abgeleitet. Hierzu dient die bereits erwähnte, elektrisch angesteuerte Kupplung 64. Die Kupplung 64 kann eine Reibkupplung, eine Klauenkupplung oder eine magnetisch arbeitende Kupplung sein.

Auf der sich parallel zu der Hauptantriebswelle 63 erstreckenden Welle 67 sitzt die angetriebene Riemenscheibe 32 des Horizontalförderers. Über diese sowie über die Riemenscheibe 33 ist der breite Riemen 34 geführt, dessen Außenseite zugleich die Förderfläche der Entnahmevorrichtung ist. Die Fig. 8 läßt erkennen, daß bei jeder Entnahmevorrichtung insgesamt vier derartiger Riemen 34 verwendet werden, um eine gleichmäßige Auflage für die zu entnehmende Ware zu bilden. Der Kraftschluß zwischen der Hauptantriebswelle 63 und der Welle 67 erfolgt, wie bereits beschrieben, über das stark übersetzende Stirnradgetriebe 66 mit den Zahnrädern 66a auf der Hauptantriebswelle 63 und 66b auf der Welle 67.

Es versteht sich von selbst, daß die voranstehend im einzelnen beschriebenen Kommissionierlager programmgesteuert arbeiten. Trotz der Komplexität ist der Steuerungsaufwand relativ gering, da die überwiegende Zahl der Prozesse durch Ein- und Ausschalten der nahezu wartungsfrei arbeitenden Kupplungen kontrolliert wird.

### Bezugszeichenliste

- 1: Lagerbereich
- 2: Bestückungsbereich
- 3: Kommissionierbereich, Entnahmebereich
- 4: Entnahmevorrichtung
- 5: Transportbahn
- 6: Transportbahn
- 6a: Transportwalze
- 7: Lagergasse
- 8: Rollenbahn
- 9: Begrenzung, Spurkranz
- 10: Modul
- 11: Querförderer
- 12: Förderrichtung
- 13: Bewegungsrichtung Querförderer
- 15: Walze
- 16: Antriebsriemen
- 17: Umlenkrolle
- 18: Umlenkrolle
- 19: Spannrolle
- 25: Rollenbahnprofil
- 30: Horizontalförderer
- 31: Rückhalteelement
- 32: Riemenscheibe
- 33: Riemenscheibe
- 34: Riemen
- 35: Antriebswelle
- 36: Rolle
- 37: Hebel
- 38: Achse
- 39: zu entnehmende Ware
- 39a: nachfolgende Ware
- 40: Nocken
- 41: Nockenfläche
- 42: Rolle
- 43: Gegengewicht
- 44: Magnetkupplung
- 45: Zugfeder
- 46: Transportriemen
- 47: Riemenscheibe
- 48: Riemenscheibe
- 49: Obertrum
- 50: Mitnehmerelement
- 51: Förderfläche
- 52: Ware
- 53: Magnetkupplung
- 54: Hauptantriebswelle
- 55: Welle
- 56: Umkehrgetriebe
- 57: Magnetkupplung
- 60: Schiene
- 61: Obertrum
- 62: Untertrum
- 63: Hauptantriebswelle
- 64: Kupplung
- 65: Nocken
- 66: Stirnradgetriebe
- 66a: Zahnrad
- 66b: Zahnrad
- 67: Welle
- 68: Gegendruckrolle
- 69: Zapfen
- 70: Kraftübertragungselement, Buchse
- 70a: Bund
- 71: Mantelfläche
- 72: Walze
- 73: Zugfeder

- α: Neigungswinkel

## Patentansprüche

1. Transport- und/oder Lagervorrichtung für Stückgüter, mit mindestens einer Rollenbahn (8) für zu transportierende und/oder zu lagernde Waren, wobei die Rollen oder Walzen der Rollenbahn (8) mit auf den Rollen bzw. Walzen drehbar angeordneten Kraftübertragungselementen versehen sind, die über ein gemeinsames Antriebsmittel (16) in Drehung versetzbar sind, und wobei das übertragbare Drehmoment zwischen dem Kraftübertragungselement und der jeweiligen Rolle bzw. Walze geringer ist, als das übertragbare Drehmoment zwischen dem gemeinsamen Antriebsmittel (16) und dem Kraftübertragungselement,
**dadurch gekennzeichnet,**
**daß** das Kraftübertragungselement eine Buchse (70) ist, die mit ihrer Innenfläche außen auf einem mit der Rolle bzw. Walze (15) fest verbundenen Lagerabschnitt der Rolle bzw. Walze drehbar gelagert ist.

2. Transport- und/oder Lagervorrichtung nach Anspruch 1, **dadurch gekennzeichnet, daß** der Lagerabschnitt ein an einem Ende der Rolle/Walze (15) angeformter Zapfen (69) mit einem geringeren Durchmesser als die Rolle/Walze selbst ist.

3. Transport- und/oder Lagervorrichtung nach Anspruch 1 oder Anspruch 2, **dadurch gekennzeichnet, daß** die Buchse (70) an ihrem der Rolle bzw. Walze zugewandten Ende mit einem umlaufenden Bund (70a) versehen ist.

4. Transport- und/oder Lagervorrichtung nach einem der Ansprüche 1 bis 3, **dadurch gekennzeichnet, daß** das gemeinsame Antriebsmittel ein endloser Antriebsriemen (16) ist.

5. Transport- und/oder Lagervorrichtung nach Anspruch 4, **dadurch gekennzeichnet, daß** der Antriebsriemen (16) jeweils zwischen der Buchse (70) und einem Druckwiderlager (68) hindurchgeführt ist.

6. Transport- und/oder Lagervorrichtung nach Anspruch 5, **gekennzeichnet durch** antriebslose Gegendruckrollen (68) als Druckwiderlager.

7. Transport- und/oder Lagervorrichtung nach einem der vorangehenden Ansprüche, **dadurch gekennzeichnet, daß** die Bewegung des Antriebsmittels der Rollenbahn (8) aus der Drehbewegung einer gemeinsamen Hauptantriebswelle (63) abgeleitet wird, die außerdem mehrere Entnahmevorrichtungen (4) antreibt.

8. Transport- und/oder Lagervorrichtung nach einem der voranstehenden Ansprüche, **dadurch gekennzeichnet, daß** die Rollenbahn (8) in Transportrichtung abschüssig geneigt ist und daß der Neigungswinkel (α) der Rollenbahn 2,5 % bis 6 %, vorzugsweise 3 % bis 5,5 % beträgt.

9. Transport- und/oder Lagervorrichtung nach einem der voranstehenden Ansprüche, **gekennzeichnet durch** einen Lagerbereich (1) mit einer Vielzahl sich darin parallel zueinander erstreckender und aus Rollenbahnen (8) bestehender Lagergassen (7) für zu lagernde Waren.

10. Transport- und/oder Lagervorrichtung nach Anspruch 9, **dadurch gekennzeichnet, daß** jede Lagergasse (7) mit einer Entnahmevorrichtung (4) versehen ist, und daß Bestandteile der Entnahmevorrichtungen (4) ein in den Förderweg der Rollenbahn (8) ragendes, betätigbares Rückhalteelement (31) sowie ein in Förderrichtung hinter dem Rückhalteelement (31) angeordneter Horizontalförderer (30) sind, dessen Fördergeschwindigkeit größer als die Fördergeschwindigkeit der Rollenbahn (8) ist.

11. Transport- und/oder Lagervorrichtung nach Anspruch 10, **dadurch gekennzeichnet, daß** die Fördergeschwindigkeit des Horizontalförderers (30) mindestens 25% größer als die Fördergeschwindigkeit der Rollenbahn (8) ist.

12. Transport- und/oder Lagervorrichtung nach Anspruch 10 oder 11, **dadurch gekennzeichnet, daß** sich der Horizontalförderer (30) aus einer angetriebenen ersten Riemenscheibe (32), mindestens einer weiteren, mitlaufenden Riemenscheibe (33) sowie einem über die Riemenscheiben (32, 33) geführten, endlosen Riemen (34) zusammensetzt, wobei die angetriebene Riemenscheibe (32) das vordere Ende und die mitlaufende Riemenscheibe (33) das hintere Ende des Horizontalförderers (30) definiert.

## Claims

1. Apparatus for transporting and/or storing articles, having at least one roller conveyor (8) for articles which are to be transported and/or stored, the rollers of the roller conveyor (8) being provided with force-transmission elements which are arranged in a rotatable manner on the rollers and can be made to rotate via a common drive means (16), and the transmittable torque between the force-transmission element and the respective roller being smaller than the transmittable torque between the common drive means (16) and the force-transmission element, **characterized in that** the force-transmission element is a bushing (70) which is mounted, by way of its inner surface, on the outside of a bearing portion of the roller (15), which is fixed to the roller.

2. Transporting and/or storage apparatus according to Claim 1, **characterized in that** the bearing portion is a journal (69) which is integrally formed at one end of the roller (15) and has a smaller diameter than the roller itself.

3. Transporting and/or storage apparatus according to Claim 1 or Claim 2, **characterized in that** the bushing (70) is provided, at its end which is directed towards the roller, with an encircling collar (70a).

4. Transporting and/or storage apparatus according to one of Claims 1 to 3, **characterized in that** the common drive means is an endless drive belt (16).

5. Transporting and/or storage apparatus according to Claim 4, **characterized in that** the drive belt (16) is guided through in each case between the bushing (70) and a pressure-exerting abutment (68).

6. Transporting and/or storage apparatus according to Claim 5, **characterized by** drive-free counterpressure rollers (68) as the pressure-exerting abutment.

7. Transporting and/or storage apparatus according to one of the preceding claims, **characterized in that** the movement of the drive means of the roller conveyor (8) is derived from the rotary movement of a common main drive shaft (63), which also drives a plurality of removal apparatuses (4).

8. Transporting and/or storage apparatus according to one of the preceding claims, **characterized in that** the roller conveyor (8) is inclined such that it slopes in the transporting direction, and **in that** the angle of inclination (α) of the roller conveyor is from 2.5% to 6%, preferably from 3% to 5.5%.

9. Transporting and/or storage apparatus according to one of the preceding claims, **characterized by** a storage region (1) with a multiplicity of storage aisles (7) which extend parallel to one another therein, comprise roller conveyors (8) and are intended for articles which are to be stored.

10. Transporting and/or storage apparatus according to Claim 9, **characterized in that** each storage aisle (7) is provided with a removal apparatus (4), and **in that** constituent parts of the removal apparatuses (4) are formed by an actuable restraining element (31), which projects into the conveying path of the roller conveyor (8), and a horizontal conveyor (30), which is arranged downstream of the restraining element (31), as seen in the conveying direction, and of which the conveying speed is greater than the conveying speed of the roller conveyor (8).

11. Transporting and/or storage apparatus according to Claim 10, **characterized in that** the conveying speed of the horizontal conveyor (30) is at least 25% greater than the conveying speed of the roller conveyor (8).

12. Transporting and/or storage apparatus according to Claim 10 or 11, **characterized in that** the horizontal conveyor (30) is made up of a first, driven belt pulley (32), at least one further belt pulley (33), which runs along therewith, and an endless belt (34), which is guided over the belt pulleys (32, 33), the driven belt pulley (32) defining the front end, and the co-running belt pulley (33) defining the rear end, of the horizontal conveyor (30).

## Revendications

1. Dispositif de transport et/ou de stockage pour des marchandises de détail, comportant au moins un transporteur à rouleaux (8) pour les marchandises à transporter et/ou à stocker, les rouleaux ou les cylindres du transporteur à rouleaux (8) étant munis d'éléments de transmission de force montés en rotation sur les rouleaux ou les cylindres, qui peuvent être mis en rotation par l'intermédiaire d'un moyen entraînement commun (16), et le couple de rotation pouvant être transmis entre l'élément de transmission de force et le rouleau ou le cylindre respectif étant plus faible que le couple de rotation pouvant être transmis entre le moyen d'entraînement commun (16) et l'élément de transmission de force,
**caractérisé en ce que** l'élément de transmission de force est une douille (70) qui, par sa surface intérieure, est montée en rotation sur l'extérieur d'un tronçon de palier du rouleau ou du cylindre relié solidairement au rouleau ou au cylindre (15).

2. Dispositif de transport et/ou de stockage selon la revendication 1, **caractérisé en ce que** le tronçon de palier est un tourillon (69) formé sur une extrémité du rouleau / cylindre (15) dont le diamètre est plus faible que celui du rouleau / cylindre.

3. Dispositif de transport et/ou de stockage selon la revendication 1 ou la revendication 2, **caractérisé en ce que** la douille (70) est munie d'une collerette circonférentielle (70a) au niveau de son extrémité orientée vers le rouleau ou le cylindre.

4. Dispositif de transport et/ou de stockage selon l'une quelconque des revendications 1 à 3, **caractérisé en ce que** le moyen d'entraînement commun est une courroie de transmission (16) sans fin.

5. Dispositif de transport et/ou de stockage selon la revendication 4, **caractérisé en ce que** la courroie de transmission (16) passe entre la douille (70) et une butée de pression (68).

6. Dispositif de transport et/ou de stockage selon la revendication 5, **caractérisé par** des rouleaux de contre-pression (68) non entraînés en tant que butée de pression.

7. Dispositif de transport et/ou de stockage selon l'une quelconque des revendications précédentes, **caractérisé en ce que** le mouvement du moyen d'entraînement du transporteur à rouleaux (8) est dérivé du mouvement de rotation d'un arbre d'entraînement principal (63) commun, qui entraîne en outre plusieurs dispositifs de reprise (4).

8. Dispositif de transport et/ou de stockage selon l'une quelconque des revendications précédentes, **caractérisé en ce que** le transporteur à rouleaux (8) est incliné vers le bas dans le sens du transport, et **en ce que** l'angle d'inclinaison (α) du transporteur à rouleaux est de 2,5% à 6 %, de préférence de 3 % à 5,5 %.

9. Dispositif de transport et/ou de stockage selon l'une quelconque des revendications précédentes, **caractérisé par** une zone de stockage (1) comportant une pluralité d'allées de stockage (7) pour les marchandises à stocker, qui s'étendent parallèlement et sont constituées de transporteurs à rouleaux (8).

10. Dispositif de transport et/ou de stockage selon la revendication 9, **caractérisé en ce que** chaque allée de stockage (7) est munie d'un dispositif de reprise (4), et **en ce que** des composants des dispositifs de reprise (4) sont un élément de retenue (31) pouvant être actionné qui pénètre dans la voie de transport du transporteur à rouleaux (8), ainsi qu'un transporteur horizontal (30) disposé dans le sens du transport en aval de l'élément de retenue (31), dont la vitesse de transport est plus élevée que la vitesse de transport du transporteur à rouleaux (8).

11. Dispositif de transport et/ou de stockage selon la revendication 10, **caractérisé en ce que** la vitesse de transport du transporteur horizontal (30) est d'au moins 25 % supérieure à la vitesse de transport du transporteur à rouleaux (8).

12. Dispositif de transport et/ou de stockage selon la revendication 10 ou 11, **caractérisé en ce que** le transporteur horizontal (30) est constitué d'une première poulie (32) entraînée, d'au moins une autre poulie (33) tournant avec celle-ci, ainsi que d'une courroie (34) sans fin guidée par l'intermédiaire des poulies (32, 33), la poulie (32) entraînée définissant l'extrémité avant, et la poulie (33) tournant avec celle-ci définissant l'extrémité arrière du transporteur horizontal (30).
